# EUROPÄISCHE PATENTANMELDUNG

(11) **EP 3 584 199 A1**
(43) Veröffentlichungstag der Anmeldung: **25.12.2019**
(21) Anmeldenummer: 18178668.2
(22) Anmeldetag: 19.06.2018
(51) Int. Cl.: B65G 43/02, B65G 17/06

(54) **VERFAHREN UND SYSTEM ZUR VERSCHLEISSERKENNUNG BEIM BETREIBEN EINES FÖRDERSYSTEMS**

(71) Anmelder: Siemens Aktiengesellschaft, 80333 München (DE)
(72) Erfinder: KOENIG, Frank, SL45DF, Windsor (GB)

(57) **Zusammenfassung**

Zur Verschleißerkennung (V) beim Betrieb eines Fördersystems (1) mit einer geschlossenen Umlaufbahn (2) ist an wenigstens einem Fahrwerk (13) ein Aufnehmer (20) angebracht, der bei Verschleiss von Rad (12) und/oder Schiene (20) die Oberfläche (19) der Schiene (20) berührt. Ein mit dem Aufnehmer (20) gekoppelter Sensor (21) registriert die durch die Berührung entstehenden Schwingungen. Diese werden drahtlos an ein Hintergrundsystem übermittelt und ausgewertet.

Dadurch ist ein Verfahren und System geschaffen, das eine Verschleißerkennung insbesondere bei geschlossenen Förderanlagen erlaubt und den Wartungsaufwand deutlich reduziert.

## Beschreibung

Die vorliegende Erfindung bezieht sich auf ein Verfahren und System zur Verschleißerkennung beim Betreiben eines Fördersystems gemäss den unabhängigen Patentansprüchen.

Die vorliegende Erfindung betrifft insbesondere das technische Gebiet von Fördersystemen innerhalb eines Flughafens für Gepäckstücke und Stückgüter. Ein Ziel eines jeden Flughafenbetreibers ist es, Ausfälle bei der Gepäckabfertigung auf ein Minimum zu reduzieren. In der Praxis bedeutet dies, dass die Gepäckfördersysteme während des Betriebs "am Leben" gehalten werden und die zeitbasierte Wartung ausserhalb der Betriebszeiten durchgeführt wird. «Supervisory Control and Data Acquisition» Systeme, im folgenden SCADA-Systeme genannt, überwachen und steuern technische Prozesse mittels eines Computer-Systems und kommen häufig bei der Überwachung von Flughafen-Gepäckfördersystemen zur Anwendung. SCADA ermöglicht Flughafen- und anderen System-Betreibern, die Betriebszustände von ganzen Systemen zu überwachen.

Ein SCADA-System kann Ausfälle von Abschnitten eines Fördersystems anzeigen, beispielsweise wenn diese Abschnitte nicht mehr für die Gepäckabfertigung verfügbar sind. Kleinere Probleme, wie Störungen im Materialfluss, beispielsweise verursacht durch verkeilte Gepäckstücke, können sehr rasch behoben werden, so dass der betreffende Abschnitt in den normalen Betriebszustand zurückkehren kann. Komponentenausfälle, die durch Verschleiß verursacht werden, können jedoch meist nicht ohne signifikante Auswirkungen auf die Verfügbarkeit und Kapazität des Systems behoben werden. Diese Ausfälle können für den Flughafen- und die anderen System-Betreiber zu großen Problemen führen.

Dieses Problem wurde bisher mit einer sogenannten «präventiven Wartung» gelöst und beinhaltet das präventive Warten von Komponenten in vorherbestimmten Wartungsintervallen. Diese zeitbasierte Wartungsstrategie ist jedoch aufwendig. Darüber hinaus erfolgen Wartungsaktivitäten an einzelnen Komponenten, die eigentlich noch gar nicht nötig wären. Dazu kommt, dass die Abnutzung einzelner, identischer Komponenten nicht gleichmäßig ist, so dass einige Komponenten zu häufig, andere Komponenten zu spät gewartet werden und es somit trotz regelmäßiger Wartungsintervalle dennoch zu Ausfällen kommt. Daher werden zeitbasierte oder vorbeugende Wartungsprogramme zunehmend durch ein Programm zur korrektiven Wartung ersetzt, bekannt als Run-to-Failure RTF oder reaktive Wartung. Diese reaktive Wartung führt zu ausgefallenen Komponenten, die während des laufenden Betriebs repariert oder ersetzt werden müssen, was zu Systemausfallzeiten und zu Vertragsstrafen für verspätet gelieferte Gepäckstücke führen kann. Diese Vertragsstrafen sind von den Flughafenbetreibern an die Fluggesellschaften zu entrichten. Daneben entstehen hohe Kosten für die Reparatur oder den Ersatz wegen des plötzlichen Versagens, nicht zuletzt deshalb, weil das Wartungspersonal ähnlich wie eine Feuerwehr sofort einsatzbereit sein muss.

Ein Flughäfen-Gepäckausgabekarussell (reclaim carussel) gibt den ankommenden Passagieren ihr aufgegebenes Gepäck zurück. Das Gepäck wird dem Gepäckausgabekarussell in der Regel über Zuführbänder von ober- oder unterhalb zugeführt und dann auf ein sich bewegendes umlaufendes Förderband (reclaim belt) verteilt. Es ist üblich, dass diese Art von System zwei Zuführbänder hat, wodurch die Zuführkapazität erhöht wird, mit der das Gepäck an das umlaufende Förderband und somit an die Passagiere geliefert wird. Das umlaufende Förderband eines Gepäckausgabekarussells besteht typischerweise aus einem reibungsbetriebenen Förderband, das mit modularen Einheiten zu einer Endlosschleife zusammengebaut wird und dessen Hauptkomponenten gerade Förderstrecken, normale Kurven, Umkehrkurven und Antriebseinheiten sind.

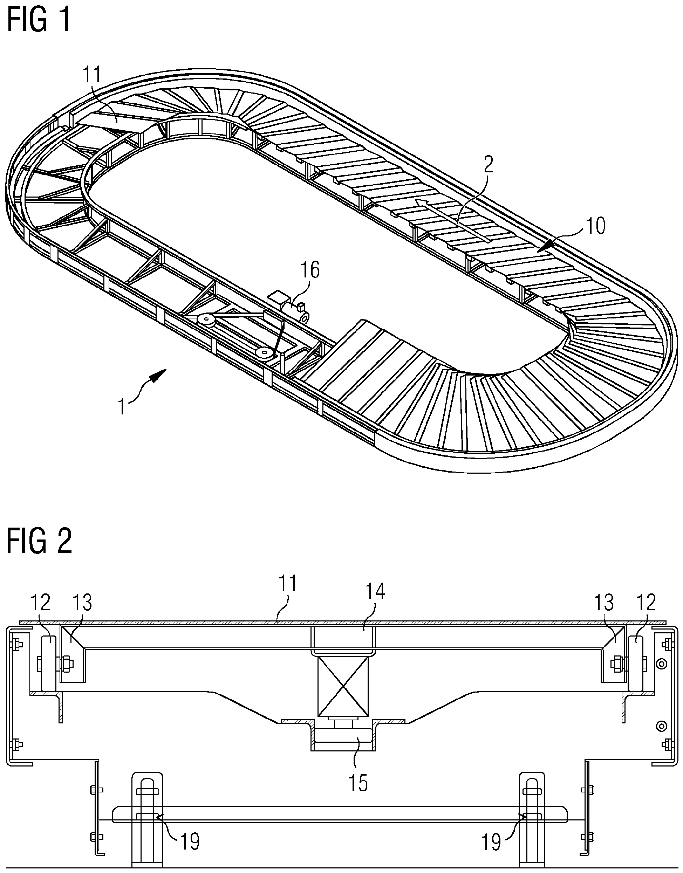

Im Folgenden wird auf die FIG 1 und 2 Bezug genommen. Gepäckausgabekarussells 1 haben in Abhängigkeit von Grösse und Konfiguration eine oder mehrere Antriebseinheiten 16 in einem geraden Bett, üblicherweise am Ende des am stärksten belasteten geraden Förderstreckenabschnitts.

Aus Redundanzgründen werden Gepäckausgabekarussells 1 typischerweise von zwei Antriebseinheiten 16 angetrieben, die über eine frei spinnende Kupplung (Fahrradprinzip) verbunden sind. Eine einzelne Antriebseinheit 16 ist so dimensioniert, dass sie ein Förderband 10 mit einer Länge von bis zu 75m längs der geschlossen Umlaufbahn 2 antreiben kann. Typischerweise sind Gummilamellen 11 des Förderbands 1200mm lang und 8mm dick. Ein gepresster Stahllamellenträger bzw. Fahrwerk 13 ist an jedem Kettenglied im Abstand von 250mm angebracht und trägt Polyurethan-bereifte Stützräder 12 und ein Führungsrad 15 für einen ruhigen, reibungslosen Betrieb. Gummilamellen 11 und Stützpuffer 19 sind an jedem Träger angebracht, um eine kontinuierliche Tragfläche zu schaffen.

Gepäckausgabekarussells 1 befinden sich in der Ankunftshalle und ihre Verschleißteile wie Rollen 13 und Schienen 18 sind hinter einer Verkleidung verborgen. Für eine vorbeugende Wartung ist der Zugang, und insbesondere auch durch die hohe Anzahl der zu inspizierenden Teile, zeitaufwendig und arbeitsintensiv. Gepäckausgabekarussells 1 arbeiten wie Förderbänder auf einer geschlossen Umlaufbahn 2 von bis zu mehreren hundert Meter Länge. Gepäckausgabekarussells 1 enthalten zwei Schienen 18 und etwa jeden halben Meter rollt eine Polyurethan-Walze als Transportrolle 13 auf je einer Schiene 18. Ein großer Flughafen betreibt bis 100 oder noch mehr solcher Gepäckausgabekarussells 1. Im Vergleich zu anderen für die Gepäckabfertigung verwendeten Komponenten sind Gepäckausgabekarussells im Betrieb sehr zuverlässig. Daher werden sie aus Kosten-Nutzen-Überlegungen meist gar nicht gewartet, sondern so lange betrieben, bis sie im laufenden Betrieb sich ein Ausfall ereignet.

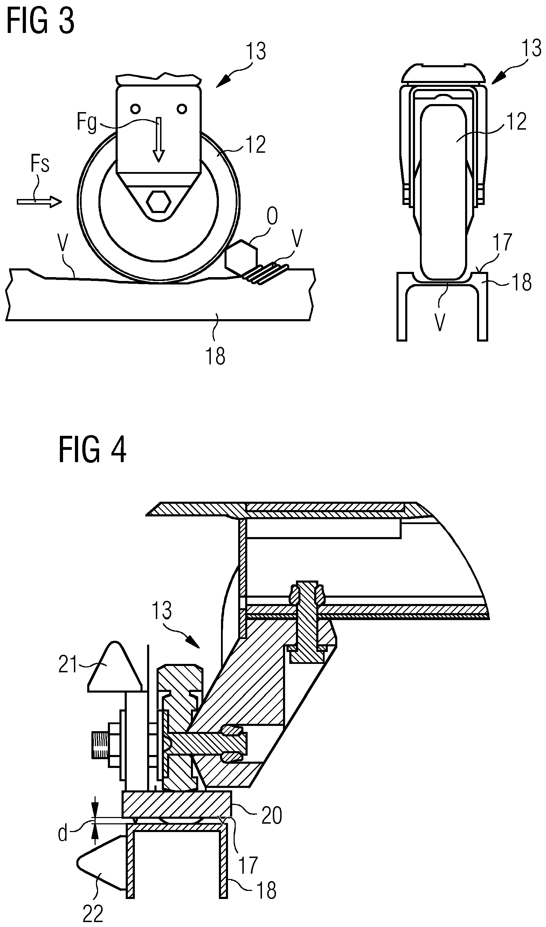

Ein abrasiver Verschleiß tritt dann auf, wenn ein fester Gegenstand, dessen Material die gleiche oder eine noch größere Härte aufweist als das Material der Transportrollen 12 oder der Schienen 18. Adhäsiver Verschleiß tritt durch Reibungswirkung zwischen Oberflächen von Übergangsstellen auf. Wenn diese Übergangsstellen unterschiedliche harte Materialien aufweisen, unterliegt das weichere Material einer Scherung und wird als Folge auf das härtere Material übertragen, siehe dazu FIG 3.

Der Verschleiß an den Schienen 18 wird durch Ablagerungen verursacht, die auf einen Abrieb mit hoher Belastung zurückzuführen sind. Abrasiver Verschleiß tritt insbesondere dann auf, wenn abrasive Partikel während der Abnutzung zusätzlich gebrochen werden. Außerdem werden Transportrollen 12, die durch ein Objekt O blockiert werden, verschlissen. Blockierte, also nicht bestimmungsgemäß rollende Transportrollen 12 sind einer starken Reibung und damit einhergehend hohen Temperaturen ausgesetzt und verlieren so Material.

Es ist daher wichtig, drohende Ausfälle von Komponenten des Fördersystems so früh zu erkennen, damit ein Betriebsausfall des Fördersystems während der Betriebszeit noch verhindert werden kann und die Reparatur unmittelbar beim Beginn einer Betriebspause durchgeführt werden kann. Eine solche Instandhaltungsstrategie wäre für Flughafen- und Systembetreiber besonders wichtig, ist jedoch bis heute noch nicht auf dem Markt verfügbar.

Die Schrift [1] offenbar eine drahtlose Überwachungsvorrichtung zur Erkennung eines Abriebzustandes für die Zugseilrinne eines Rades vorgeschlagen. Dazu wird ein Drahtlos-Sensor eingesetzt, der den erkannten Abrieb als Abnutzungszustandsinformation erfasst und an eine Managementplattform übermittelt. Dadurch entfallen regelmässige Inspektionen durch Fachpersonal. Diese Vorrichtung kann für Fördersysteme nicht wirtschaftlich eingesetzt werden, da so eine sehr grosse Anzahl von Sensoren platziert werden müsste und der wirtschaftliche Nutzen wegen der grossen Anzahl insgesamt gering bliebe.

Der vorliegenden Erfindung liegt daher die Aufgabe zugrunde, ein Verfahren und System zur Verschleißerkennung beim Betrieb eines Fördersystems anzugeben, welches mit geringem apparativen Aufwand einen Verschleiß V mit Angabe der Verschleißstelle (=Verschleißort) detektiert und somit eine Verschleiß-Erkennung möglichst vor einem Systemausfall erlaubt.

Diese Aufgabe wird durch die in den unabhängigen Ansprüchen angegebenen Merkmale gelöst.

Die erfindungsgemässe Lösung zeichnet sich aus durch ein Verfahren zur Verschleißerkennung beim Betrieb eines Fördersystems, das gebildet wird aus wenigstens einem in einer geschlossenen Bahn umlaufenden Fahrwerk, wobei das Fahrwerk Transportrollen enthält, die auf Schienen bewegt werden und wobei am Fahrwerk ein Aufnehmer befestigt ist, der einen vorgegebenen Abstand zur Schienenoberfläche aufweist. Bei einem durch den Betrieb entstehenden Verschleiß an der Transportrolle und/oder an der Schiene berührt der Aufnehmer die Schienenoberfläche und wird dadurch in Schwingungen versetzt. Ein mit dem Aufnehmer gekoppelter Schwingungssensor registriert die Schwingungen. Die registrierten Schwingungen werden vom Schwingungssensor zusammen mit einem Zeitstempel und einer Identität des Schwingungssensors drahtlos an ein Hintergrundsystem übermittelt. Im Hintergrundsystem werden die übermittelten Daten einer Analyse unterzogen und bei Abweichungen als Verschleiß erkannt und mit einer Meldung signalisiert.

So können sich die folgenden Vorteile zusätzlich ergeben:
i) Durch die erfindungsgemässe Lösung kann ein Verschleiß an einer Transportrolle oder an einer Schiene vor Eintritt eines Systemausfalls erkannt werden und die Wartungsarbeiten können noch rechtzeitig gestartet werden.
ii) Die erfindungsgemässe Lösung eignet sich insbesondere für Fördersysteme, bei denen Fahrwerke und Schienen verborgen sind und nur durch Öffnen von Abdeckungen inspiziert und ggf. repariert werden können.

Bevorzugt werden Schwingungssensoren eingesetzt, die neben den registrierten Schwingungsdaten auch ihre Zustandsdaten wie zB. verbleibende Batteriekapazität und Temperatur übermitteln. Dadurch ist auch eine Überwachung der Sensoren selbst sichergestellt und die Wartungsaufwendungen werden dadurch noch einmal deutlich reduziert.

In einer bevorzugten Ausführungsform ist auch vorgesehen, dass Sensoren an den Schienen angebracht sind, um einen Verschleiß an den Transportrollen frühzeitig erkennen zu können, zB. eine Flachstelle einer Transportrolle aufgrund einer Blockierung durch einen Fremdkörper.

Weitere vorteilhafte Ausführungsformen der Erfindung sind in den abhängigen Ansprüchen angegeben.

Die Erfindung wird nachfolgend anhand der Zeichnung beispielsweise näher erläutert. Dabei zeigen:
Figur 1 Perspektivische Ansicht eines teilweise geöffneten Gepäckausgabekarussells;
Figur 2 Querschnittdarstellung eines Gepäckausgabekarussells;
Figur 3 Darstellungen von Verschleißstellen an einer Schiene;
Figur 4 Anordnung von Sensoren in einem Gepäckausgabekarussell;
Figur 5 Darstellung der Kommunikationswege von Sensoren, Gateway und Hintergrundsystem;
Figur 6 Darstellungen von detektiertem Ort von Verschleißstellen an einem Fördersystem;
Figur 7 Darstellung der verschiedenen (Verschleiß-) Zustände von Rad und Schiene.

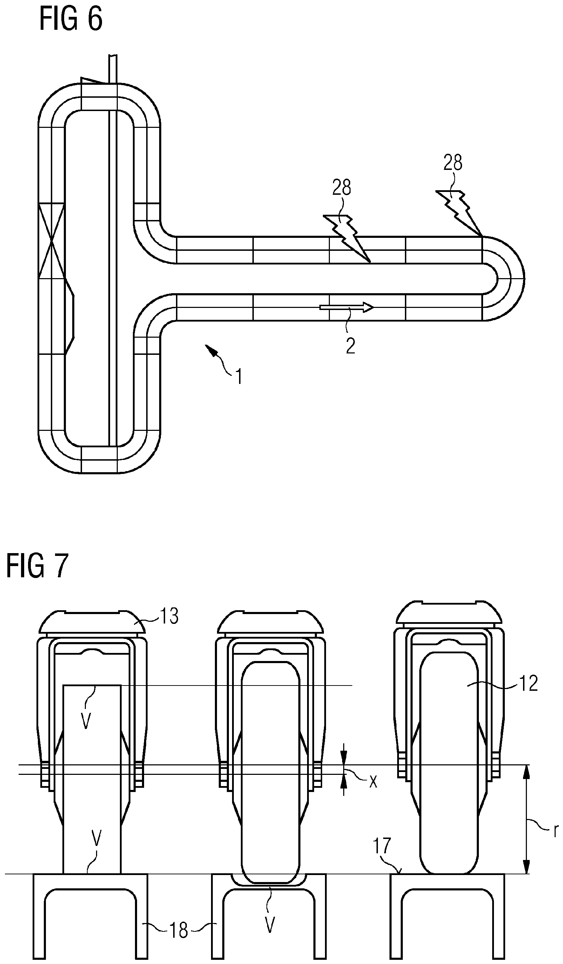

Das nachstehend detailliert beschriebene Ausführungsbeispiel bezieht sich auf ein Gepäckausgabekarussell. Die Erfindung ist jedoch nicht auf ein Gepäckausgabekarussell beschränkt, sondern für jede Art von Fördersystemen anwendbar, die einen geschlossenen Umlauf aufweisen und wenigstens ein Fahrwerk umfassen, dessen wenigstens zwei Rollen bzw. Räder auf je einer Schiene bewegt werden. Je ein Beispiel solcher geschlossener Umläufe ist der FIG 1 bzw. der FIG 6 zu entnehmen.

Die konkrete Ausführung der Detektion von Verschleißstellen wird anhand der FIG 4 beschrieben. FIG 4 zeigt ein Fahrwerk 13 mit einem Rad 12 - auch Transportrolle 12 genannt -, das auf der Schienenoberfläche 17 einer Schiene 18 rollt. Da die Führung des Fahrwerks 13 mit einer weiteren Führungsrolle 15 erfolgt, sind die Schienen flach ausgebildet, also nicht in der Art einer Eisenbahnschiene mit der Führung durch den Spurkranz eines Rades.

Am Fahrwerk 13 ist ein Aufnehmer 20 befestigt, dessen Abstand d zur Schienenoberfläche fest einstellbar ist und höchstens wenige Millimeter beträgt. Mit dem Betrieb der Förderanlage ergibt sich ein Verschleiß V entweder am Rad 12 oder auf einem Teil der Schiene 18, wie dies in FIG 3 rechts deutlich gezeigt ist. Durch diesen Verschleiß V wird zu einem gegebenen Zeitpunkt der Aufnehmer 20 die Schienenoberfläche 17 berühren. Dadurch entstehen ein Kratzgeräusch bzw. Schwingungen, die von einem Sensor 21 registriert werden. Dieses Prinzip ist vergleichbar mit einer Grammophonnadel, die eine Schallplatte berührt und zielt auf eine automatische 24/7-Verschleißkontrolle ab und macht so eine manuelle Prüfung überflüssig; 24/7 steht für 24h an 7 Tagen.

Ein drahtloser, batteriebetriebener Sensor 21 ist mechanisch mit dem Aufnehmer 20 gekoppelt und registriert die Schwingungen/Vibrationen des Aufnehmers 20. Der Sensor 21 führt zur Registrierung der Vibrationen eine 3-Achsenbeschleunigungsmessung durch. Die registrierten Schwingungen werden zusammen mit einer Identität des Sensors 21 an ein im Fördersystem 1 angebrachtes Gateway 23 übermittelt.

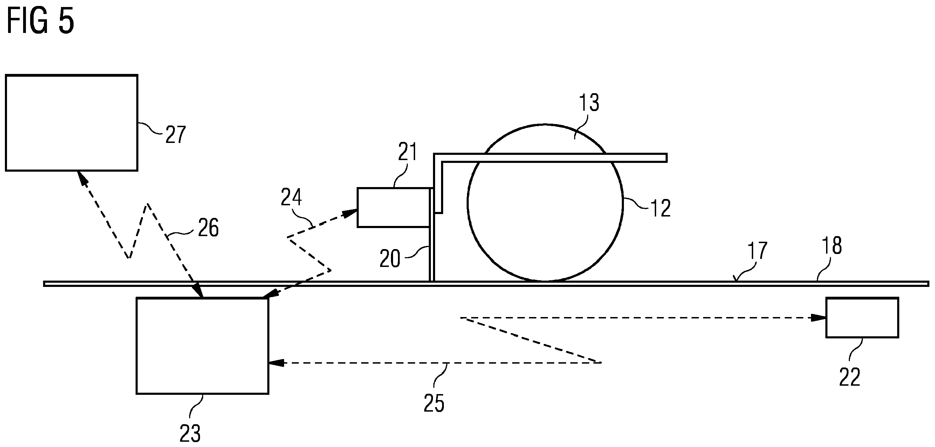

Für die Feststellung des Ortes einer Verschleißstelle wird auf FIG 5 Bezug genommen. Wie oben erläutert, führt das Fahrwerk 13 einen geschlossenen Umlauf aus und fährt bei jedem Umlauf auch in der unmittelbaren Nähe des Gateways 23 vorbei. Durch eine permanente oder zyklische Kommunikation 24 zwischen Sensor 21 und Gateway 23 wird dadurch bei jeder Vorbeifahrt eine Nullzeit definiert. Dieses Gateway 23 hat somit eine Funktion einer Bake. Damit steht bei dieser Übermittlung der Schwingungen auch ein Zeitstempel zur Verfügung, der eine relative Zeit zur Nullzeit beinhaltet. Da die Umlaufgeschwindigkeit solcher Fördersysteme bekannt und in aller Regel konstant ist, kann die Stelle einer überstarken Schwingung - und somit eine Verschleißstelle V - aufgrund einer Berührung des Aufnehmers 21 mit der Schienenoberfläche 17 relativ zur Lage des Gateways 23 bestimmt werden. Relativ zur Lage steht für die Länge des zurückgelegten Wegs und nicht etwa für eine Punkt-Punkt Distanz zwischen Gateway und Verschleißstelle V. Ausserdem kann auch eine Uhrzeit zu jeder Registrierung eines Sensors 21 oder 22 im Hintergrundsystem zugeordnet werden.

Für die Erläuterung der Verschleißarten wird auf FIG 3 und FIG 7 Bezug genommen. FIG 3 zeigt rechts eine Schiene 18 mit einem Verschleiß V an der Schienenoberfläche 17. Das Rad 12 ist hier intakt. Nicht dargestellt in FIG 3 rechts ist der Aufnehmer 20. Es ist jedoch unmittelbar erkennbar, dass der Aufnehmer 20 mit der ursprünglichen Schienenoberfläche links und rechts des Verschleißes V in Kontakt tritt und somit in Schwingungen versetzt wird, die vom Sensor 21 registriert werden können. FIG 7 zeigt rechts einen Neuzustand von Rad 12 und Schiene 18 bzw. Schienenoberfläche 17. Mit r ist der Abstand (=Radius) von der Drehachse des Rades 12 zur Schienenoberfläche 17 bezeichnet. FIG 7 in der Mitte stellt einen Verschleiß V an der Schiene 18 dar, in FIG 7 links ist ein Verschleiss V eines Rades 12 dargestellt. Beiden Verschleißarten ist gemeinsam, dass die Drehachse gegenüber der ursprünglichen Lage um einen Abstand x verschoben ist.

Das Berühren des Aufnehmers 20 mit der Schienenoberfläche 17 führt zu einer Erhöhung der Schwinggeschwindigkeit und/oder Schwingamplitude.

Der Sensor 21 erkennt über den Aufnehmer 21 eine Erhöhung der Schwinggeschwindigkeit, die durch Fremdkörper O verursacht wird. Solche Fremdkörper können die Räder blockieren wie dies zB in FIG 3 links dargestellt wird. Es wird erwartet, dass Räder im Normalbetrieb Schwingungen (Peak-to-Peak-Geschwindigkeit) von ca. 5mm/s auf die Schiene übertragen und "blockierte" Räder-Schwingungen von ca. 85 mm/s erzeugen. Mit "blockierte" Räderschwingungen werden Schwingungen verstanden, die durch Räder erzeugt werden, die aufgrund einer vorstehend erwähnten Blockade einen inhomogen Verschleiß in Form einer Flachstelle aufweisen.

Zusätzlich zum Sensor 21 am Fahrwerk 13 kann je ein Sensor 22 an je einer Schiene 20 - also links und rechts - angebracht werden, der vom gleichen Typ wie der Sensor 21 ist und die vorstehend erwähnten Schwingungen durch Räder mit Flachstellen registriert.

### Die vom Gateway 23 empfangenen Daten, also wenigstens das Tripel

Frequenz/Amplitude, Zeitstempel und Identität des Sensors werden an ein Hintergrundsystem - zB an eine Cloud - übermittelt und dort mittels eines Signalverarbeitungsserver analysiert durch
- Vergleich mit den vorangehen empfangenen Tripeln;
- statistische Auswertung über die Zeit.

Wenn bei dieser Analyse eine signifikante Abweichung festgestellt wird, kann eine Meldung an den Betreiber mit Angabe der Anlage und des Ortes in der Anlage übermittelt werden, um Wartungspersonal aufbieten zu können. Im Hintergrundsystem 27 sind weitere Anlagenparameter gespeichert, insbesondere eine Zuordnung von Identität eines Sensors zu einer Anlage und Zuordnung von Identität eines Sensors zu einer Spur und Rad 12 bzw. zu einer Schiene 18.

Als Sensoren 21, 22 sind "all in one" "Bluetooth Low Energy" BLE fähige Sensor vorgesehen, die hier als «Vibrations-BLE-Sensoren» bezeichnet werden.

Ein Fördersystem 1 verfügt vorzugsweise über wenigsten zwei fixe an Schienen 18 befestigte Sensoren 22 und zwei auf einem Fahrwerk 13 befindliche mit dem Aufnehmer 20 gekoppelte Sensoren 21. Jeder dieser Sensoren 21, 22 ist von der vorgenannten Art «Vibrations-BLE-Sensor» verfügen. Diese Vibrations-BLE-Sensoren sind batteriebetrieben, mit einer Lebensdauer von 3 bis 9 Jahren. Die Lebensdauer ist abhängig vom Datenübertragungszyklus zum Gateway. Diese Schwingungs- und Temperatur-BLE-Sensoren können zusätzlich ihren internen Status wie zB die verbleibende Batteriekapazität zum vorerwähnten Tripel via Gateway 23 an das Hintergrundsystem 27. übermitteln. Ebenso ist eine Übermittlung der Temperatur als Option möglich. Mit diesen zusätzlichen Daten kann im Hintergrundsystem durch den Signalverarbeitungsserver somit auch der Zustand der Sensoren überwacht werden. Dadurch wird die Verfügbarkeit des vorgeschlagenen Verfahrens und Systems zur Verschleißerkennung beim Betrieb eines Fördersystems noch einmal und ohne zusätzlichen apparativen Aufwand verbessert.

### Liste der Bezugszeichen, Glossar

- 1: Fördersystem, Gepäckkarussell
- 2: Bahn, geschlossene Umlaufbahn
- 10: Förderband
- 11: Lamellen, Gummilamellen
- 12: Stützrad, Polyurethan-Walze; Transportrolle, Rad
- 13: Fahrwerk
- 14: Lamellenträger
- 15: Führungsrad
- 16: Antriebseinheit
- 17: Schienenoberfläche
- 18: Schiene
- 19: Stützpuffer
- 20: Aufnehmer
- 21: Sensor an Fahrwerk
- 22: Sensor an Schiene
- 23: Gateway, WiFi-Gateway, Bake
- 24: Kommunikation Sensor 21 ←→ Gateway
- 25: Kommunikation Sensor 22 ←→ Gateway
- 26: Kommunikation ←→ Hintergrundsystem
- 27: Hintergrundsystem, Auswertesystem
- 28: Signalisierte Verschleißstelle
- BLE: Bluetooth Low Energy
- d: Abstand zwischen Aufnehmer und Schienenoberfläche
- O: Fremdkörper
- r: Radius eines Rades im unverschlissenen Zustand
- V: Verschleiß, Verschleiß-Stelle
- x: Durch Verschleiß verursachte Verschiebung von Drehachsen

### Liste der zitierten Dokumente

[1] CN103458040 (A)
   «Equipment abrasion state wireless monitoring device based on internet of things»
   TIANJIN ZHONGTIANYI INFORMATION TECHNOLOGY CO LTD

## Patentansprüche

1. Verfahren zur Verschleißerkennung beim Betrieb eines Fördersystems (1) das gebildet wird aus wenigstens einem in einer geschlossenen Bahn umlaufenden Fahrwerk (13), wobei das Fahrwerk (13) Transportrollen (12) enthält, die auf Schienen (18) bewegt werden und wobei am Fahrwerk (13) ein Aufnehmer (20) befestigt ist, der einen vorgegebenen Abstand (d) zur Schienenoberfläche (17) aufweist;
**gekennzeichnet durch** die Verfahrensschritte
a) bei einem durch den Betrieb entstehenden Verschleiß an der Transportrolle (12) und/oder an der Schiene (18) berührt der Aufnehmer (20) die Schienenoberfläche (17) und wird dadurch in Schwingungen versetzt;
b) ein mit dem Aufnehmer (20) gekoppelter Schwingungssensor (21) registriert die Schwingungen;
c) die registrierten Schwingungen werden vom Schwingungssensor (21) zusammen mit einem Zeitstempel und einer Identität des Schwingungssensors (21) drahtlos an ein Hintergrundsystem (27) übermittelt (24, 26);
d) im Hintergrundsystem (27) werden die im Verfahrensschritt c) übermittelten Daten einer Analyse unterzogen und bei Abweichungen als Verschleiß (V) erkannt und mit einer Meldung signalisiert.

2. Verfahren nach Anspruch 1,
beim dem die Bahn durch zwei Schienen (18) gebildet wird und an jeder Schiene (18) wenigstens ein fixer Schwingungssensors (22) befestigt ist,
**gekennzeichnet durch** die Verfahrensschritte
e) Registrierung der durch eine vorbeirollende einen Verschleiß aufweisende Transportrolle (13) erzeugte Schwingungen durch den fixen Schwingungssensor (22)
f) Übermittlung (25, 26) der im Verfahrensschritt e) registrierten Schwingungen zusammen mit einem Zeitstempel und einer Identität des fixen Schwingungssensors (22) an das Hintergrundsystem (27);
g) Durchführung des Verfahrensschrittes d) von Anspruch 1 für die im Verfahrensschritt f) übermittelten Daten.

3. Verfahren nach Anspruch 1 oder 2,
**dadurch gekennzeichnet, dass**
die Übermittlung der Daten von den Sensoren (21, 22) zum Hintergrundsystem (27) über ein Gateway (23) erfolgt, wobei das Gateway (23) an einem festen Ort der Bahn installiert ist und bei jeder Überfahrt eines einen Sensor (21) aufweisenden Fahrwerks (13) eine Nullzeit gesetzt wird.

4. Verfahren nach einem der Ansprüche 1 bis 3,
**dadurch gekennzeichnet, dass**
die Abweichungen durch einen statistischen Vergleich mit vorangehenden Registrierungen oder durch einen Vergleich mit einer fixen Grösse erkannt werden.

5. Verfahren nach einem der Ansprüche 1 bis 4,
**dadurch gekennzeichnet, dass**
zusätzlichen zu den registrierten Schwingungen Zustandsdaten eines jeden Sensors (21, 22) übermittelt werden.

6. Verfahren nach Anspruch 5,
**dadurch gekennzeichnet, dass**
die Zustandsdaten eines jeden Sensors (21, 22) eine verbleibende Batteriekapazität und seine Temperatur enthalten.

7. Verfahren nach Anspruch 6,
**dadurch gekennzeichnet, dass**
bei Unterschreiten einer festgelegten Batteriekapazität oder bei Überschreiten einer bestimmten Temperatur ebenfalls eine Meldung gemäss im Verfahrensschritt d) abgesetzt wird.

8. System zur Verschleißerkennung beim Betrieb eines Fördersystems (1) das gebildet wird aus in einer geschlossenen Bahn umlaufenden Fahrwerk (13) und bei dem das Fahrwerk (13) Transportrollen (12) enthält, die auf Schienen (18) bewegt werden und wobei am Fahrwerk (13) ein Aufnehmer (20) befestigt ist, der einen vorgegebenen Abstand (d) zur Schienenoberfläche (17) aufweist; umfassend Mittel zur Durchführung der Verfahrensschritte a) bis d) von Anspruch 1.

9. System nach Anspruch 8 bei dem die Bahn durch zwei Schienen (18) gebildet wird und an jeder Schiene (18) wenigstens ein Schwingungssensors (22) befestigt ist, der durch eine vorbeirollende einen Verschleiß aufweisende Transportrolle (13) erzeugte Schwingungen registriert und an ein Hintergrundsystem (27) übermittelt (25, 26); umfassend Mittel zur Durchführung des Verfahrensschrittes d) von Anspruch 1 .
